# EUROPÄISCHE PATENTSCHRIFT

(11) **EP 2 682 039 B1**
(45) Veröffentlichungstag und Bekanntmachung des Hinweises auf die Patenterteilung: **24.08.2016**
(21) Anmeldenummer: 13401065.1
(22) Anmeldetag: 02.07.2013
(51) Int. Cl.: A47L 15/42

(54) **Geschirrspülmaschine mit einer Wärmepumpe**
Dishwasher with a heat pump
Lave-vaisselle doté d'une pompe à chaleur

(30) Priorität: 03.07.2012 DE 102012105903
(43) Veröffentlichungstag der Anmeldung: 08.01.2014
(73) Patentinhaber: Miele & Cie. KG, 33332 Gütersloh (DE)
(72) Erfinder: Bertram, Andre, 33739 Bielefeld (DE); Dahms, Tobias, 30519 Hannover (DE)

(56) Entgegenhaltungen:
- EP-A1- 1 369 075
- EP-A2- 1 864 603
- EP-A2- 2 322 879
- EP-A2- 2 449 945
- DE-U1- 9 410 453
- JP-A- H10 103 770
- US-A1- 2012 047 961

## Beschreibung

Die Erfindung betrifft eine Geschirrspülmaschine mit einem Spülraum, in welchem Sprüheinrichtungen zur Beschickung von Spülgut mit Spülflotte angeordnet sind, und mit einem Wärmepumpenkreislauf zur Aufheizung von Spülflotte, welcher einen Verflüssiger aufweist.

Eine Geschirrspülmaschine der vorbeschriebenen Art ist beispielsweise in der EP2449945A2 oder in der DE 102011000042.9 beschrieben. Sie verfügt über einen Spülbehälter, der einen Spülraum bereitstellt. Der Spülraum dient der Aufnahme von zu reinigendem Spülgut, bei dem es sich vorrangig um Geschirr oder Besteck handelt. Zur Beschickung des Spülgutes mit Spülflotte sind innerhalb des Spülraumes um eine gemeinsame Drehachse verdrehbar gelagerte Sprüharme angeordnet. In der Regel befinden sich drei solcher Sprüharme in Höhenrichtung der Geschirrspülmaschine übereinander. Zum Anschluss dieser Sprüharme an ein Wasser- und/oder Spülflottenzuführsystem sind im Spülraum entsprechend ausgebildete Ankopplungsstellen vorgesehen. Die Geschirrspülmaschine ist darüber hinaus mit einem Wärmepumpenkreislauf ausgestattet, um den Energieverbrauch insbesondere während der Heizphase der Maschine zu reduzieren, da der Heizvorgang den größten Anteil am Energieverbrauch der Geschirrspülmaschine verursacht. Der Wärmepumpenkreislauf weist insbesondere einen Verdampfer, einen Verdichter, einen Verflüssiger, eine Drosselstelle und einen diese Komponenten verbindenden Strömungskreislauf auf.

Die DE 102011000042.9 beschreibt insbesondere ein Verfahren zum Aufheizen von Spülflotte einer Geschirrspülmaschine, welches eine Luft- Wasser-Wärmepumpe verwendet. Dabei saugt die Geschirrspülmaschine während der Heizphase Raumluft (Zuluft) an, welche über den Verdampfer der Wärmepumpe geleitet und abgekühlt wird. Die entzogene Wärmeenergie aus der Raumluft wird auf ein Arbeitsmedium (verdampftes Kältemittel) übertragen, welches anschließend mittels des Verdichters komprimiert und somit auf ein höheres Temperaturniveau gebracht wird. Schließlich kondensiert das heiße Kältemittel an dem Verflüssiger und heizt die Spülflotte auf.

Schwierigkeiten ergeben sich jedoch dadurch, dass die aufzuwärmende Spülflotte stark feststoffhaltig ist. Diese Feststoffe lagern sich innerhalb des Verflüssigers an den Wandungen ab und können die Wärmeübertragungsleistung herabsetzen.

Es ist daher die Aufgabe der Erfindung, eine Geschirrspülmaschine mit einem Wämepumpensystem vorzuschlagen, welche bei niedrigem Wasserverbrauch und hoher Energieeffizienz ein Verstopfen des Verflüssigers durch in der Spülflotte vorhandene Feststoffe vermeidet.

Zur Lösung dieser Aufgabe wird mit der Erfindung eine Geschirrspülmaschine mit den Merkmalen von Anspruch 1 vorgeschlagen.

Die erfindungsgemäße Geschirrspülmaschine umfasst eine Spülraum, in welchem mindestens zwei Sprüheinrichtungen zur Beschickung von Spülgut mit Spülflotte angeordnet sind, und einen Wärmepumpenkreislauf zur Aufheizung von Spülflotte. Der Wärmepumpenkreislauf weist typischerweise einen Verdampfer, einen Verdichter, einen Verflüssiger, eine Drosselstelle und einen Strömungskreislauf auf. Hierdurch wird eine Luft- Wasser-Wärmepumpe realisiert, wobei die Geschirrspülmaschine während der Heizphase Raumluft (Zuluft) ansaugt, welche durch den Verdampfer der Wärmepumpe geleitet und abgekühlt wird. Die entzogene Wärmeenergie aus der Raumluft wird auf ein Arbeitsmedium (verdampftes Kältemittel) übertragen, welches anschließend mittels des Verdichters komprimiert und somit auf ein höheres Temperaturniveau gebracht wird. Schließlich kondensiert das heiße Kältemittel an dem Verflüssiger und heizt dabei die Spülflotte auf.

Die Geschirrspülmaschine, etwa eine Haushaltgeschirrspülmaschine, weist einen mit einer Beschickungstür in an sich bekannter Weise verschließbaren Spülraum auf. Während eines Spülprogramms wird das im Spülraum befindliche Spülgut zunächst gespült und anschließend getrocknet. Das Spülen umfasst typischerweise mehrere wasserführende Programmabschnitte, etwa die Programmabschnitte REINIGEN und KLARSPÜLEN. Im Spülbetrieb, also während wasserführender Programmabschnitte ist der Spülraum durch die Beschickungstür verschlossen.

Bei der, etwa vom Ventilator geförderten Zuluft, welche die Wärmequelle der Wärmepumpe darstellt, handelt es sich um Raumluft, also Luft aus dem Aufstellungsraum der Geschirrspülmaschine etwa der Küche, die insbesondere eine für derartige Räume übliche Umgebungstemperatur aufweist, also ca. 15 bis 25°C. Die Förderung der Zuluft bzw. Raumluft erfolgt während der Heizphase eines Spülprogramms, bei der Spülflotte aufgeheizt wird, insbesondere also während eines wasserführenden Programmabschnittes. Die Förderung der Zuluft erfolgt somit insbesondere bei geschlossener Beschickungstür.

Gemäß der Erfindung werden mit koaxial zueinander angeordneten Rohren die Vorteile genutzt, dass Kältemittel und Spülflotte über eine längere Strecke parallel zueinander geführt werden können und innerhalb der koaxial zueinander angeordneten Rohre eine große Wechselwirkungsoberfläche auffinden. Diese Vorteile sind bereits von in anderen Einsatzbereichen genutzten Verflüssigern mit koaxial zueinander angeordneten Rohren bekannt, die ausschließlich gasförmige oder niedrigviskose Medien führen.

Damit die Vorteile derart aufgebauter Verflüssiger dennoch auch für feststoffhaltige Medien wie Spülflotte genutzt werden können, wird die geometrische Anordnung von Kältemittelleitung und Spülflottenleitung so verändert, dass nun das heiße Kältemittel die aufzuheizende Spülflotte umgibt, indem das Spülflottenrohr innerhalb des Kältemittelrohres angeordnet ist.

Durch diese erfindungsgemäße Ausgestaltung des Verflüssigers weist das Spülflotte führende Rohr einen Strömungsquerschnitt auf, welcher der Festsetzung von in der Spülflotte vorhandenen Feststoffen wirksam entgegenwirkt und gleichzeitig einen nur geringen Bauraum (mit geringem Wasserbedarf zur Befüllung) einnimmt.

Durch die Erfindung wird bewusst in Kauf genommen, dass das heiße Kältemittel nun die zu erwärmende Spülflotte umschließt, was energietechnisch verlustbehaftet ist. Jedoch hat sich diese Anordnung trotzdem als vorteilhaft erwiesen, weil dieser Nachteil durch die platzsparende Anordnung und den geringen Wasserbedarf kompensiert wird.

Die Geschirrspülmaschine weist mindestens zwei, vorzugsweise aber drei Sprüheinrichtungen auf. Die Sprüheinrichtungen sind vorzugsweise Sprüharme, insbesondere drehbar im Spülraum gelagerte Sprüharme, welche typischerweise eine gemeinsame Drehachse aufweisen.

Erfindungsgemäß weist eine erste Sprüheinrichtung zu einem Sockelbereich der Geschirrspülmaschine einen größeren Abstand auf als eine zweite Sprüheinrichtung, d.h. die beiden Sprüheinrichtungen sind in einer unterschiedlichen Höhe im Spülraum angeordnet.

Zur Beschickung der Sprüheinrichtungen mit Spülflotte weist die Geschirrspülmaschine typischerweise eine Wasserweiche auf, welche eine Leitungsverzweigung des Spülflottenzuflusses auf mehrere zu unterschiedlichen Sprüheinrichtungen, etwa Sprüharmen, führenden Leitungen darstellt. Die Wasserweiche kann insbesondere dazu geeignet sein, entsprechend dem voreingestellten Spülprogramm die Sprüheinrichtungen wechselweise mit Spülflotte zu versorgen. Ein Ausführungsbeispiel sieht vor, dass der Verflüssiger in Strömungsrichtung der Spülflotte zwischen der Wasserweiche und einer ersten Sprüheinrichtung, insbesondere einer oberen oder der obersten Sprüheinrichtung angeordnet ist.

Die Erfindung sieht vor, dass die beiden koaxial zueinander angeordneten Rohre eine Leitung bilden, welche sich zumindest annähernd von dem Sockelbereich der Geschirrspülmaschine bis zu der von dem Sockelbereich entfernteren der beiden Sprüheinrichtungen oder zumindest bis zu deren Höhenniveau erstreckt. Im vorgezogenen Fall, dass drei oder mehr Sprüheinrichtungen vorhanden sind, ist bevorzugt, dass die beiden koaxial zueinander angeordneten Rohre eine Leitung bilden, welche sich von dem Sockelbereich der Geschirrspülmaschine zumindest annähernd bis zu der von dem Sockelbereich entferntesten, d.h. obersten Sprüheinrichtung oder zumindest bis zu deren Höhenniveau erstreckt.

Die erfindungsgemäße Geschirrspülmaschine erfordert somit keine zusätzliche separate Wärmeübertragungsstrecke zur Energieübertragung vom Kältemittel auf die Spülflotte. Stattdessen wird zur Wärmeübertragung die Strecke verwendet, welche ohnehin besteht, um den Verflüssiger mit einem oberen oder bevorzugt dem obersten Sprüharm zu verbinden. Diese Verbindungsleitung ist lang genug, um die Übertragung der Wärmeenergie vom Kältemittel auf die Spülflotte sicherzustellen. Somit kann eine hohe Energieeffizienz der Geschirrspülmaschine erreicht werden, ohne gleichzeitig einen erhöhten Bauraum für zusätzliche Wärmeübertragungsleitungen bzw. Wärmeüberträger vorsehen zu müssen, welche wiederum das Volumen der Wasserwege vergrößern bzw. Totzonen innerhalb der Geschirrspülmaschine bedingen würden, was einen erhöhten Wasserbrauch zu Folge hätte.

Besonders vorteilhaft ist die Geschirrspülmaschine so ausgestaltet, dass die beiden koaxial zueinander angeordneten Rohre des Verflüssigers im Wesentlichen eine Länge aufweisen, die der Höhe des Spülraums vergleichbar ist. Somit steht für die Länge der koaxial zueinander angeordneten Rohre der gesamte Abstand zwischen dem Sockelbereich der Geschirrspülmaschine und dem Anschluss für den obersten Sprüharm zur Verfügung. Dieser Abstand beträgt annähernd die gesamte Höhe des Spülraumes und stellt somit eine Wärmeübertragungslänge zur Verfügung, welche geeignet ist, die Wärme optimal vom Kältemittel auf die Spülflotte zu übertragen.

Vorteilhaft sind die koaxial zueinander angeordneten Rohre aus Metall, insbesondere aus Kupfer oder Edelstahl. Hierdurch wird ein guter thermischer Kontakt zwischen dem heißen Kältemittel und der Spülflotte sichergestellt.

Schließlich empfiehlt es sich, dass das Kältemittelrohr mit einer Ummantelung aus wärmeisolierendem Material ummantelt ist. Da gemäß der Erfindung - entgegen dem Stand der Technik - das Rohr für das heiße Medium das Rohr für das kalte Medium umgibt, kann die im äußeren Rohr enthaltene Wärmeenergie nach außen abgeleitet werden und somit dem Wärmepumpenkreislauf verloren gehen. Da die Oberfläche des äußeren Rohres eine nicht zu unterschätzende Größe aufweist, sollte im Sinne einer erhöhten Energieeffizienz der Geschirrspülmaschine eine wärmeisolierende Ummantelung vorgesehen sein. Die isolierende Ummantelung kann dabei aus allen zu diesem Zweck im Stand der Technik bekannten Materialien, beispielsweise Styropor, bestehen.

Eine weitere Ausgestaltung sieht vor, dass der Verflüssiger thermisch an den Spülbehälter angekoppelt wird. Hierdurch kann ein Teil der erzeugten Wärme direkt in den Spülraum eingeleitet und so der Wirkungsgrad weiter verbessert werden. Zur thermischen Ankopplung des Verflüssigers an den Spülbehälter ist bevorzugterweise ein Wärmeübertragungselement mit guter Wärmeleitfähigkeit vorhanden, welcher mit der Seitenwand des Spülbehälter einerseits und mit dem Verflüssiger andererseits in unmittelbarem Kontakt steht, diese Komponenten also jeweils berührt. Das Wäremübertragungselement hat vorzugsweise eine erste Fläche, welche an die Kontur einer Seitenwand des Spülbehälters angepasst ist, und eine zweite Fläche, welche an die Kontur des Verflüssigers angepasst ist. Die zweite Fläche des Wärmeübertragungselements kann insbesondere halbschalenartig ausgebildet sein, derart das der Verflüssiger vom Wärmeübertragungselement zum Teil, etwa hälftig, aufgenommen wird. Das Wärmeübertragungselement kann den Verflüssiger auch vollständig umgeben.

Gemäß einer weiteren vorteilhaften Ausführungsform der Erfindung ist dem Verflüssiger ein Kältemittelsammler nachgeordnet. Dieser ist vorzugsweise so angeordnet, dass sich Kältemittelkondensat in Schwerkraftrichtung sammeln kann. Hierfür ist der Kältemittelsammler am unteren Ende des Verflüssigers oder unterhalb des Verflüssigers, d.h. insbesondere im Sockelbereich der Geschirrspülmaschine angeordnet. Hierdurch kann eine etwaige Überflutung des Verflüssigers durch das Kältemittel vermieden werden. Das Volumen des Kältemittelsammlers beträgt vorzugsweise ein Mehrfaches vom Volumen des für das Kältemittel im Verflüssiger zur Verfügung stehenden Raumes, welcher sich ringspaltförmig entlang des Verflüssigers und um das Spülflottenrohr herum erstreckt, insbesondere beträgt es das 2-3-fache jenes Volumens, vorzugsweise 30 bis 45 cm³. Vorzugsweise enthält der Kältemittelsammler ein Trocknungsmittel, welches zur Entfeuchtung des eingesetzten Kältemittels dient. Als Trocknungsmittel eignet sich hierfür besonders gut Zeolith.

Es ergibt sich damit alles in allem eine gegenüber dem Stand der Technik deutlich verbesserte Geschirrspülmaschine, bei welcher ein Verstopfen des Verflüssigers wirksam vermieden werden kann und somit ein energieeffizienter Wärmepumpenkreislauf sichergestellt und ein niedrieger Wasserverbrauch erreicht werden kann.

Weitere Vorteile und Merkmale der Erfindung ergeben sich aus der nachfolgenden Beschreibung anhand der Figuren.

Dabei zeigen
- Figur 1: in einer perspektivischen Frontansicht eine Geschirrspülmaschine;
- Figur 2: die Geschirrspülmaschine gemäß Figur 1 in einer Seitenansicht;
- Figur 3: in einer schematischen Ansicht einen Wärmepumpenkreislauf;
- Figur 4: in einer schematischen Draufsicht einen Sockelbereich einer Geschirrspülmaschine mit darin angeordnetem Wärmepumpenkreislauf gemäß Figur 3;
- Figur 5: eine Seitenansicht des Sockelbereiches der Geschirrspülmaschine gemäß Figur 4;
- Figur 6: eine schematische Schnittdarstellung durch eine Geschirrspülmaschine;
- Figur 7: eine schematische Schnittdarstellung durch einen erfindungsgemäßen Verflüssiger.

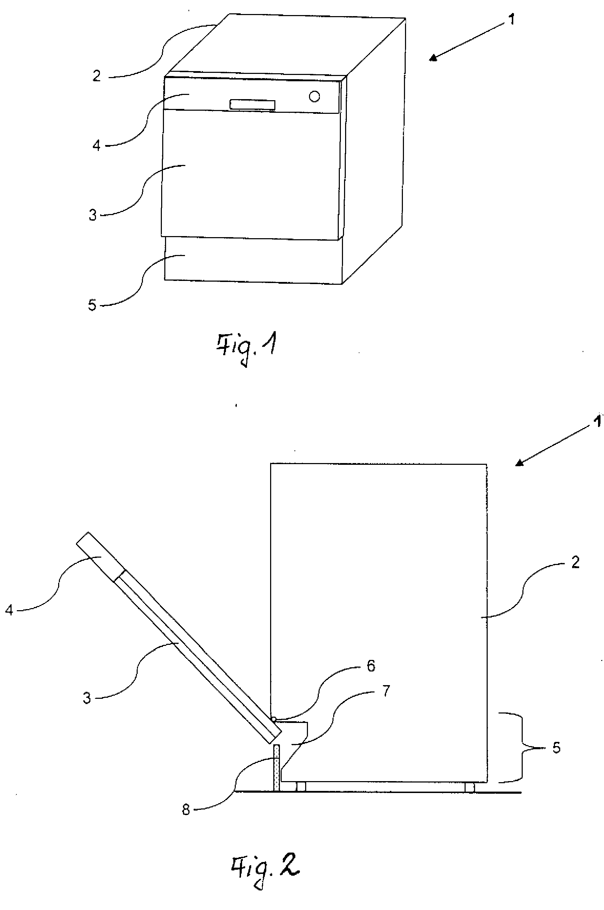

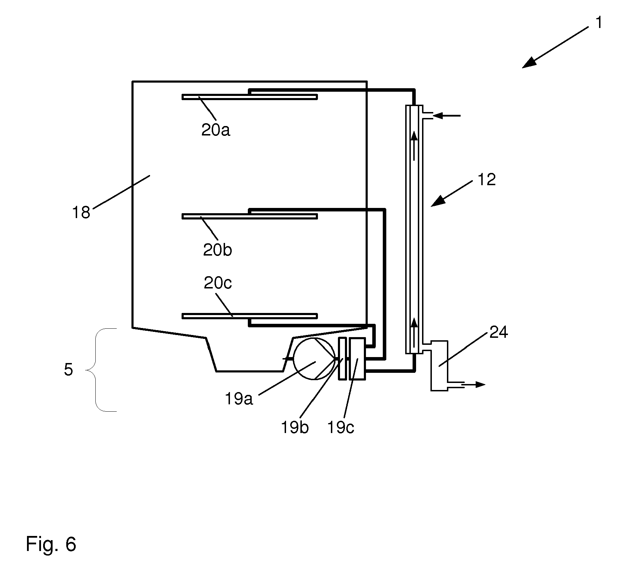

Figur 1 zeigt schematisch eine haushaltsübliche Geschirrspülmaschine 1 in einer Frontansicht von außen. Die Geschirrspülmaschine 1 verfügt über ein Außengehäuse 2, eine Beschickungstür 3, eine Bedienblende 4 sowie einen Sockelbereich 5, welcher die meisten technischen Komponenten wie Sammeltopf, Umwälzpumpe, elektrische Heizung, Wasserweiche, Laugenpumpe und weitere dem Fachmann bekannte Komponenten enthält. Innerhalb des Außengehäuses 2 befindet sich der Spülraum 18 (in Figur 1 nicht dargestellt). Dieser Spülraum 18 weist mehrere, vorzugsweise um eine gemeinsame Drehachse verdrehbar gelagerte, Sprüharme 20a, 20b, 20c, zur Beschickung von Spülgut mit Spülflotte auf (vgl. Fig. 6).

In Figur 2 ist eine Seitenansicht der Geschirrspülmaschine 1 gemäß Figur 1 dargestellt. Zu erkennen ist die Beschickungstür 3, die über einen Drehpunkt 6 in einen Freiraum 7 einschwenkt. Der Freiraum 7 und der Sockelbereich 5 sind durch einen Sockel 8 verkleidet.

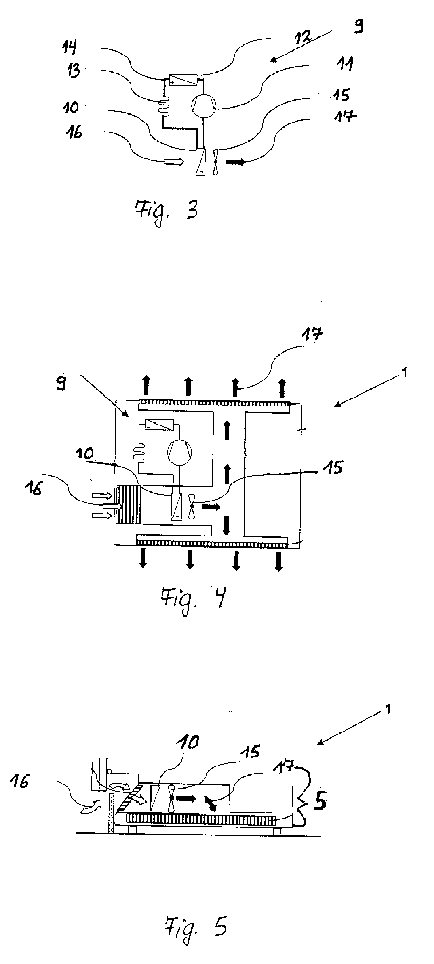

Figur 3 zeigt einen schematischen Aufbau eines Wärmepumpenkreislaufes 9 mit den Komponenten Verdampfer 10, Verdichter 11, Verflüssiger 12, Drosselstelle 13 sowie einen diese Komponenten verbindenden Strömungskreislauf 14.

Der Wärmepumpenkreislauf 9 gemäß Figur 3 funktioniert so, dass die vom Ventilator 15 durch den Verdampfer 10 gesaugte Zuluft 16 ihre Wärmeenergie an ein in dem Strömungskreislauf 14 geführtes Kältemittel abgibt. Die entzogene Wärmeenergie aus der Zuluft 16 wird im Verdampfer 10 auf das Kältemittel übertragen, wodurch dieses verdampft. Anschließend wird das Kältemittem mittels des Verdichters 11 komprimiert und somit auf ein höheres Temperaturniveau gebracht. Schließlich kondensiert das heiße Kältemittel an dem Verflüssiger 12 und heizt die Spülflotte, welche innerhalb des Verflüssigers 12 an dem heißen Kältemittel vorbeigeführt wird, auf. Zum Zwecke der effizienten Energieübertragung vom Kältemittel auf die Spülflotte verfügt der Verflüssiger 12 über zwei koaxial zueinander angeordnete Rohre 21, 22 (in Figur 3 nicht dargestellt), von welchen das äußere Rohr 21 Kältemittel und das innere Rohr 22 Spülflotte führt. Das Spülflotte führende Rohr 22 ist innerhalb des Kältemittel führenden Rohres 21 angeordnet. Diese Ausgestaltung verhindert, dass sich in der Spülflotte befindende Feststoffe in dem Verflüssiger 12 festsetzen können.

Figur 4 zeigt den Wärmepumpenkreislauf 9 gemäß Figur 3 in seiner Anordnung in dem Sockelbereich 5 der Geschirrspülmaschine 1.

Figur 5 zeigt den Sockelbereich 5 der Geschirrspülmaschine 1 gemäß Figur 4 in einer Seitenansicht. Der gesamte Wärmepumpenkreislauf 9 bis auf den Verflüssiger 12 ist im Sockelbereich 5 der Geschirrspülmaschine 1 angeordnet. Der Verflüssiger 12 erstreckt sich von dort aus nach oben, so dass die beiden koaxial zueinander angeordneten Rohre 21, 22 des Verflüssigers 12 genau so lang sind wie die Strecke zwischen dem Sockelbereich 5 der Geschirrspülmaschine 1 und einem oberen, vorzugsweise dem obersten Sprüharm 20 innerhalb des Spülraumes 18 der Geschirrspülmaschine 1. Hierdurch sind keine zusätzlichen Leitungen erforderlich, um die notwendige Energieübertragung zwischen dem Kältemittel und der Spülflotte sicherzustellen. Die ohnehin vorhandene Leitung zwischen dem Verflüssiger 12 und einem oberen oder dem obersten Sprüharm 20 der Geschirrspülmaschine 1 ist lang genug, um die Spülflotte ausreichend zu erhitzen.

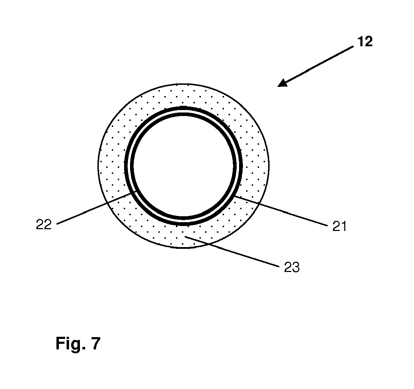

Figur 6 zeigt eine schematische Schnittdarstellung einer Geschirrspülmaschine 1 mit einem Spülraum 18, in welchem ein oberster Sprüharm 20a zur Beschickung von nicht dargestelltem Spülgut mit Spülflotte angeordnet ist. Erkennbar ist weiterhin eine Umwälzpumpe 19a zur Umwälzung der Spülflotte sowie der Verflüssiger 12, welcher in Form zweier koaxial zueinander angeordneter Rohre 21, 22 (welche in Fig. 7 im Querschnitt dargestellt sind) vom Sockelbereich 5 der Geschirrspülmaschine 1 bis zu dem obersten Sprüharm 20a ausgebildet ist. Dabei kann die Wärmeübertragung von dem Kältemittel auf die Spülflotte über die gesamte Länge der Rohre 21, 22, welche zumindest näherungsweise der Höhe des Spülraums 18 entspricht, stattfinden. Diese Länge ist ausreichend, um die Spülflotte optimal zu erhitzen. Weiterhin muss kein besonderer Raum für den Verflüssiger 12 innerhalb des Außengehäuses 2 der Geschirrspülmaschine 1 zur Verfügung gestellt werden, da das Spülflottenrohr 22 ohnehin an dieser Stelle vom Sockelbereich 5 zum obersten Sprüharm 20a verläuft. Zur Sammlung des Kältemittelkondensats ist weiterhin ein Kältemittelsammler 24 in einem unteren Bereich des Verflüssigers 12 vorgesehen. Neben dem obersten Sprüharm 20a weist die dargestellte Geschirrspülmaschine 1 ohne Beschränkung der Allgemeinheit einen mittleren Sprüharm 20b und einen unteren Sprüharm 20c auf. Eine Wasserweiche 19c verteilt die von der Umwälzpumpe geförderte Spülflotte in die jeweiligen zu den drei Sprüharmen 20a, 20b, 20c führenden Leitungen. Optional kann eine elektrische Heizung 19b vorhanden sein, auf die jedoch vorteilhafterweise aufgrund der erfindungsgemäßen Erwärmung durch den Verflüssiger 12 der Wärmepumpe auch verzichtet werden kann. Der Verflüssiger 12 ist in Strömungsrichtung der Spülflotte zwischen der Wasserweiche 19c und dem obersten Sprüharm 20a angeordnet.

Figur 7 zeigt einen Querschnitt durch die beiden koaxial zueinander angeordneten Rohre 21, 22 des Verflüssigers 12. Dabei ist das Spülflottenrohr 22 erfindungsgemäß innerhalb des Kältemittelrohres 21 angeordnet. Eine wärmeisolierende Ummantelung 23, beispielsweise aus Styropor, umgibt das äußere Kältemittelrohr 21, wodurch der Energieverlust nach außen reduziert werden kann.

Durch die erfindungsgemäße Lösung findet keine Erhöhung des Totvolumens innerhalb der Geschirrspülmaschine 1 statt. Jeder Umwälzkreislauf einer Geschirrspülmaschine 1 hat ein gewisses Totvolumen. Damit ist die Summe aller Innenvolumen der Umwälzpumpe 19a, der Zuflussrohre und Sprüharme 20a,20b, 20c gemeint. Ein solches Totvolumen erhöht den Wasserverbrauch, da es vollständig gefüllt werden muss, bevor Spülflotte für die Benetzung des Geschirrs zur Verfügung steht. Da gemäß der vorliegenden Erfindung kein zusätzlicher Bauraum für den Verflüssiger 12 notwendig ist, bleibt auch das Totvolumen innerhalb der Geschirrspülmaschine 1 gleich. Dies wird dadurch erreicht, dass der Zulauf zu einem oberen, etwa den mittleren von drei Sprüharmen, vorzugsweise aber gemäß der Ausgestaltung in Fig. 6 zum obersten Sprüharm 20a durch den Verflüssiger 12 stattfindet, welcher aus dem Kältemittelrohr 21 und dem koaxial dazu angeordneten Spülflottenrohr 22 besteht. Im Spülflottenrohr 22 fließt die Spülflotte in der Bildebene von unten nach oben, während das Kältemittel durch das Kältemittelrohr 21, welches gemäß der Darstellung in Fig. 7 ein Ringspalt 7 ist, im Gegenstrom von oben nach unten geführt wird. Die Richtungen sind jeweils durch Pfeile in den Zeichnungen dargestellt.

Fig. 7 zeigt einen Schnitt durch den Verflüssiger 12. Das Spülflottenrohr 22 hat einen Innendurchmesser von typischerweise 10 bis 17mm, damit der Druckabfall gering ist und von der Spülflotte mitgeführte Schmutzpartikel das Spülflottenrohr 22 gut passieren können. Das Spülflottenrohr 22 besteht wegen der notwendigen Laugenbeständigkeit vorteilhafterweise aus Edelstahl und besitzt eine Wandstärke von 0,5 bis 1 mm. Das Kältemittelrohr 21 sollte wegen der notwendigen Druckbeständigkeit und Gasdichtheit ebenfalls aus Metall mit einer ähnlichen Wandstärke ausgeführt sein. Der Innendurchmesser des Kältemittelrohres 21 ist so zu wählen, dass der sich zwischen Kältemittelrohr 21 und Spülflottenrohr 22 ergebende Ringspalt 0,5 bis 1 mm beträgt. Dieser enge Ringspalt gewährleistet eine hohe Strömungsgeschwindigkeit des Kältemittels, was wiederum für einen guten Wärmeübergang und einen Abtransport des anfallenden Kondensats in den Kältemittelsammler 24 sorgt. Der enge Ringspalt bewirkt kältemittelseitig ein geringes Innenvolumen des Verflüssigers 12, wodurch dieser leicht durch flüssiges Kältemittel überflutet werden kann, was die wirksame Wärmetauscherfläche in unzulässiger Weise verringern würde. Dies wird in vorteilhafter Weise durch einen unterhalb des Verflüssigers 12 angeordneten Kältemittelsammler 24 verhindert. Aufgrund des in Fig. 6 beschriebenen Gegenstrombetriebs, bei der die Spülflotte im Spülflottenrohr 22 nach oben und das Kältemittel im Kältemittelrohr 21 nach unten fließt, kann sich das Kältemittel bzw. Kältemittelkondensat sich auf einfache Weise in Schwerkraftrichtung im Kältemittelsammler 24 sammeln, ohne die wirksame Wärmetauscherfläche zu verringern. Der Kältemittelsammler 24 verhindert somit das "Überfluten" des Ringspaltes mit flüssigem Kältemittel.

Insgesamt ergibt sich dadurch für den Verflüssiger 12 ein Außendurchmesser von etwa 13 bis 22mm, wodurch er gut in das Außengehäuse 2 der Geschirrspülmaschine 1 integrierbar ist. Da das Spülflottenrohr 22 ein ohnehin in der Geschirrspülmaschine 1 vorhandenes Zulaufrohr zum obersten Sprüharm 20a mit ähnlicher Länge und Durchmesser ist, entsteht kein zusätzliches Totvolumen. Zudem kann das Spülflottenrohr 22 auf einfache Art und Weise, z.B. mittels Schlauchstücken, mit der Umwälzpumpe 19a und mit dem obersten Sprüharm 20a verbunden werden.

Die Erfindung sieht weiterhin Ausgestaltungen vor, bei welchen Kältemittelrohr 21 und Spülflottenrohr 22 keinen runden Querschnitt, sondern beispielsweise einen ovalen Querschnitt aufweisen. Durch derartige Formen kann beispielsweise erreicht werden, dass der Verflüssiger 12 leichter in das Außengehäuse 2 der Geschirrspülmaschine 1 integriert werden kann. Weiterhin kann das Spülflottenrohr 22 eine an seinem Außendurchmesser angeordnete Berippung aufweisen, mittels welcher sich die Oberfläche zur Erhöhung der Wärmetauscherleistung erhöhen kann.

### Bezugszeichen

- 1: Geschirrspülmaschine
- 2: Außengehäuse
- 3: Beschickungstür
- 4: Bedienblende
- 5: Sockelbereich
- 6: Drehpunkt
- 7: Freiraum
- 8: Sockel
- 9: Wärmepumpenkreislauf
- 10: Verdampfer
- 11: Verdichter
- 12: Verflüssiger
- 13: Drosselstelle
- 14: Strömungskreislauf
- 15: Ventilator
- 16: Zuluft
- 17: Abluft
- 18: Spülraum
- 19a: Umwälzpumpe
- 19b: Heizeinrichtung
- 19c: Wasserweiche
- 20a-c: Sprüharm
- 21: Kältemittelrohr
- 22: Spülflottenrohr
- 23: Ummantelung
- 24: Kältemittelsammler

## Patentansprüche

1. Geschirrspülmaschine (1) mit einem Spülraum (18), in welchem mindestens zwei Sprüheinrichtungen, insbesondere drehbar gelagerte Sprüharme (20a, 20b), zur Beschickung von Spülgut mit Spülflotte angeordnet sind,
und mit einem Wärmepumpenkreislauf (9) zur Aufheizung von Spülflotte, welcher einen Verflüssiger (12) umfasst,
**dadurch gekennzeichnet, dass** der Verflüssiger (12) zwei koaxial zueinander angeordnete Rohre (21, 22) aufweist, von welchen eines ein Kältemittelrohr (21) und eines ein Spülflottenrohr (22) ist,
wobei das Spülflottenrohr (22) innerhalb des Kältemittelrohres (21) angeordnet ist, und dass eine erste Sprüheinrichtung (20a) zu einem Sockelbereich (5) der Geschirrspülmaschine (1) einen größeren Abstand aufweist als eine zweite Sprüheinrichtung (20b), und die beiden koaxial zueinander angeordneten Rohre (21, 22) eine Leitung bilden, welche sich von dem Sockelbereich (5) der Geschirrspülmaschine (1) bis zu der von dem Sockelbereich (5) entfernteren ersten Sprüheinrichtung (20a) erstreckt.

2. Geschirrspülmaschine (1) nach einem der vorhergehenden Ansprüche,
**dadurch gekennzeichnet,**
**dass** drei Sprüheinrichtungen in einem unterschiedlichen Abstand zu einem Sockelbereich (5) der Geschirrspülmaschine (1) angeordnet sind, und die beiden koaxial zueinander angeordneten Rohre (21, 22) eine Leitung bilden, welche sich von dem Sockelbereich (5) der Geschirrspülmaschine (1) bis zu der von dem Sockelbereich (5) am weitesten entfernten Sprüheinrichtung (20a) erstreckt.

3. Geschirrspülmaschine (1) nach einem der vorhergehenden Ansprüche,
**dadurch gekennzeichnet,**
**dass** die beiden koaxial zueinander angeordneten Rohre (21, 22) des Verflüssigers (12) eine Länge aufweisen, die zumindest näherungsweise der Höhe des Spülraums (18) entspricht.

4. Geschirrspülmaschine (1) nach einem der vorhergehenden Ansprüche,
**dadurch gekennzeichnet,**
**dass** der Verflüssiger (12) in Strömungsrichtung der Spülflotte zwischen einer Wasserweiche (19c) und einer ersten Sprüheinrichtung (20a) angeordnet ist.

5. Geschirrspülmaschine (1) nach einem der vorhergehenden Ansprüche,
**dadurch gekennzeichnet,**
**dass** der Verflüssiger (12) in thermischem Kontakt mit dem Spülbehälter steht.

6. Geschirrspülmaschine (1) nach einem der vorhergehenden Ansprüche,
**dadurch gekennzeichnet,**
**dass** das Kältemittelrohr (21) mit einer Ummantelung (23) aus wärmeisolierendem Material ummantelt ist.

7. Geschirrspülmaschine (1) nach einem der vorhergehenden Ansprüche,
**dadurch gekennzeichnet,**
**dass** dem Verflüssiger (12) ein Kältemittelsammler (24) nachgeordnet ist, welcher so angeordnet ist, dass sich Kältemittelkondensat in Schwerkraftrichtung sammeln kann.

8. Geschirrspülmaschine (1) nach dem vorhergehenden Anspruch,
**dadurch gekennzeichnet,**
**dass** das Volumen des Kältemittelsammlers (24) ein Mehrfaches vom Volumen des für das Kältemittel im Verflüssiger (12) zur Verfügung stehenden Raumes entspricht, insbesondere das 2-3-fache, vorzugsweise 30 bis 45 cm³.

9. Geschirrspülmaschine (1) nach einem der Ansprüche 7 oder 8
**dadurch gekennzeichnet,**
**dass** der Kältemittelsammler (24) ein Trocknungsmittel, insbesondere Zeolith, enthält, welches zur Entfeuchtung des eingesetzten Kältemittels dient.

10. Geschirrspülmaschine (1) nach einem der vorhergehenden Ansprüche,
**dadurch gekennzeichnet,**
**dass** zwischen dem Kältemittelrohr (21) und dem Spülmittelrohr (22) ein vom Kältemittel durchströmter Ringspalt ausgebildet ist, der eine Spaltbreite von 0,3 bis 2 mm, vorzugsweise von 0,5 bis 1 mm aufweist.

## Claims

1. Dishwasher (1) comprising a washing chamber (18), in which there are arranged at least two spray devices, in particular rotatably mounted spray arms (20a, 20b), for supplying washing solution to washware, and comprising a heat pump circuit (9) for heating washing solution, which circuit comprises a condenser (12), **characterised in that** the condenser (12) comprises two pipes (21, 22) arranged coaxially with one another, one of which is a refrigerant pipe (21) and one is a washing solution pipe (22), the washing solution pipe (22) being arranged inside the refrigerant pipe (21), and **in that** a first spray device (20a) is at a larger spacing than a second spray device (20b) from a base region (5) of the dishwasher (1), and the two pipes (21, 22) arranged coaxially with one another form a line that extends from the base region (5) of the dishwasher (1) to the first spray device (20a), which is further away from the base region (5).

2. Dishwasher (1) according to any of the preceding claims, **characterised in that** three spray devices are arranged at different spacings from a base region (5) of the dishwasher (1), and the two pipes (21, 22) arranged coaxially with one another form a line that extends from the base region (5) of the dishwasher (1) to the spray device (20a) furthest away from the base region (5).

3. Dishwasher (1) according to any of the preceding claims, **characterised in that** the length of the two pipes (21, 22) of the condenser (12) arranged coaxially with one another at least approximately corresponds to the height of the washing chamber (18).

4. Dishwasher (1) according to any of the preceding claims, **characterised in that** the condenser (12) is arranged between a water distributor (19c) and a first spray device (20a) in the flow direction of the washing solution.

5. Dishwasher (1) according to any of the preceding claims, **characterised in that** the condenser (12) is in thermal contact with the washing container.

6. Dishwasher (1) according to any of the preceding claims, **characterised in that** the refrigerant pipe (21) is encased by a jacket (23) made of thermally insulating material.

7. Dishwasher (1) according to any of the preceding claims, **characterised in that** a refrigerant collector (24) that is arranged such that refrigerant condensate can collect in the direction of gravity is arranged downstream of the condenser (12).

8. Dishwasher (1) according to the preceding claim, **characterised in that** the volume of the refrigerant collector (24) corresponds to a multiple of the volume of the space available for the refrigerant in the condenser (12), in particular 2-3 times, preferably from 30 to 45 cm³.

9. Dishwasher (1) according to either claim 7 or claim 8, **characterised in that** the refrigerant collector (24) contains a drying agent, in particular zeolite, which is used to extract moisture from the refrigerant used.

10. Dishwasher (1) according to any of the preceding claims, **characterised in that** an annular gap, through which the refrigerant flows, is formed between the refrigerant pipe (21) and the washing solution pipe (22), the width of which gap is from 0.3 to 2 mm, preferably from 0.5 to 1 mm.

## Revendications

1. Lave-vaisselle (1) avec un espace de lavage (18), dans lequel au moins deux dispositifs d'aspersion, en particulier des bras d'aspersion (20a, 20b) supportés en rotation, sont disposés pour exposer le produit à laver à un bain de lavage, et avec un circuit de pompe à chaleur (9) destiné à chauffer le bain de lavage et qui comprend un condenseur (12), **caractérisé en ce que** le condenseur (12) présente deux tubes (21, 22) disposés de façon coaxiale l'un par rapport à l'autre, dont l'un est un tube d'agent réfrigérant (21) et l'autre un tube de bain de lavage (22), dans lequel le tube de bain de lavage (22) est disposé à l'intérieur du tube d'agent réfrigérant (21), et **en ce qu'**un premier dispositif d'aspersion (20a) présente, par rapport à une zone de socle (5) du lave-vaisselle (1), une distance plus importante qu'un deuxième dispositif d'aspersion (20b), et les deux tubes (21, 22) disposés de façon coaxiale l'un par rapport à l'autre forment une conduite qui s'étend de la zone de socle (5) du lave-vaisselle (1) jusqu'au premier dispositif d'aspersion (20a) plus éloigné de la zone de socle (5).

2. Lave-vaisselle (1) selon l'une des revendications précédentes, **caractérisé en ce que** trois dispositifs d'aspersion sont disposés à une distance différente d'une zone de socle (5) du lave-vaisselle (1), et les deux tubes (21, 22) disposés de façon coaxiale l'un par rapport à l'autre forment une conduite qui s'étend de la zone de socle (5) du lave-vaisselle (1) jusqu'au dispositif d'aspersion (20a) le plus éloigné de la zone de socle (5).

3. Lave-vaisselle (1) selon l'une des revendications précédentes, **caractérisé en ce que** les deux tubes (21, 22) du condenseur (12) disposés de façon coaxiale l'un par rapport à l'autre présentent une longueur qui correspond au moins approximativement à la hauteur de l'espace de lavage (18).

4. Lave-vaisselle (1) selon l'une des revendications précédentes, **caractérisé en ce que** le condenseur (12) est disposé, dans la direction d'écoulement du bain de lavage, entre un distributeur d'eau (19c) et un premier dispositif d'aspersion (20a).

5. Lave-vaisselle (1) selon l'une des revendications précédentes, **caractérisé en ce que** le condenseur (12) est en contact thermique avec la cuve de lavage.

6. Lave-vaisselle (1) selon l'une des revendications précédentes, **caractérisé en ce que** le tube d'agent réfrigérant (21) est enveloppé d'une enveloppe (23) en matériau thermiquement isolant.

7. Lave-vaisselle (1) selon l'une des revendications précédentes, **caractérisé en ce que**, en aval du condenseur (12), il est installé un collecteur d'agent réfrigérant (24) qui est disposé de telle sorte que du condensat d'agent réfrigérant peut s'accumuler dans la direction de la pesanteur.

8. Lave-vaisselle (1) selon l'une des revendications précédentes, **caractérisé en ce que** le volume du collecteur d'agent réfrigérant (24) correspond à un multiple du volume de l'espace disponible pour l'agent réfrigérant dans le condenseur (12), en particulier à 2 à 3 fois ce volume, de préférence à 30 à 45 cm³.

9. Lave-vaisselle (1) selon l'une des revendications 7 ou 8, **caractérisé en ce que** le collecteur d'agent réfrigérant (24) contient un agent de séchage, en particulier de la zéolithe, qui sert à déshumidifier l'agent réfrigérant utilisé.

10. Lave-vaisselle (1) selon l'une des revendications précédentes, **caractérisé en ce que**, entre le tube d'agent réfrigérant (21) et le tube de bain de lavage (22), il est constitué un interstice annulaire parcouru par l'agent réfrigérant qui présente une largeur d'interstice de 0,3 à 2 mm, de préférence de 0,5 à 1 mm.
